(19) Europäisches Patentamt
European Patent Office
Office européen des brevets

(11) **EP 2 085 310 B1**

(12) **FASCICULE DE BREVET EUROPEEN**

(45) Date de publication et mention
de la délivrance du brevet:
**07.07.2010 Bulletin 2010/27**

(51) Int Cl.:
***B64C 27/82*** *(2006.01)*

(21) Numéro de dépôt: **09001128.9**

(22) Date de dépôt: **28.01.2009**

(54) **Procédé d'optimisation d'un rotor anti-couple caréné à gêne acoustique minimale pour un giravion, notamment un hélicoptère, et rotor anti-couple caréné ainsi obtenu**

Optimierungsverfahren für einen verkleideten Heckrotor mit minimaler Lärmbelästigung für ein Drehflügelflugzeug, insbesondere einen Hubschrauber, und so erhaltener verkleideter Heckrotor

Method of optimising a faired anti-torque rotor with minimum acoustic disturbance for a rotorcraft, in particular a helicopter, and faired anti-torque rotor thus obtained

(84) Etats contractants désignés:
**GB IT**

(30) Priorité: **30.01.2008 FR 0800499**

(43) Date de publication de la demande:
**05.08.2009 Bulletin 2009/32**

(73) Titulaire: **EUROCOPTER**
**13725 Marignane Cédex (FR)**

(72) Inventeur: **Marze, Henri-James**
**13340 Rognac (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
**FR-A- 2 719 549**

**Description**

La présente invention concerne un procédé de minimisation de la gène acoustique due à un dispositif anti-couple à rotor arrière caréné, dénommé FENESTRON® par la demanderesse.

En effet, un giravion et en particulier un hélicoptère est équipé d'au moins un moteur pour assurer la sustentation et la propulsion de l'appareil. Ce moteur, fixé sur la structure dudit giravion, produit un couple moteur utilisé pour la mise en rotation du rotor principal. La réaction d'un unique rotor principal génère un couple en lacet ayant tendance à faire tourner le fuselage en sens inverse de celui du rotor principal. Afin de compenser ce couple, les constructeurs installent généralement, à l'arrière du fuselage du giravion, un rotor arrière, dit « anti-couple » dont le pas des pales est presque toujours variable et commandé par le pilote au moyen du palonnier.

Bien entendu, un tel rotor anti-couple participe de plus aux évolutions en lacet et en virage de l'appareil.

Un dispositif anti-couple FENESTRON® consiste en un rotor ou hélice carénée de diamètre réduit par rapport à celui d'un rotor arrière classique en raison, en particulier, de sa nécessaire intégration dans la structure arrière du giravion. Un carénage recouvre cette hélice en canalisant l'écoulement aérodynamique. Le rotor, ainsi logé aux creux d'une veine, comporte un plus grand nombre de pales que celui du rotor arrière classique en raison du diamètre réduit de l'hélice. Par exemple, le FENESTRON® de l'hélicoptère GAZELLE® (masse totale de 2.000 kg) conçu par la demanderesse est muni de 13 pales alors que le rotor arrière classique de l'hélicoptère SUPER PUMA® de la même demanderesse n'a que 4 pales pour une masse totale de l'appareil de l'ordre de 9.000 kg.

Un rotor arrière classique ou caréné est à la source, au même titre que les moteurs de bruits d'origine aérodynamique. Les autres bruits ont des sources mécaniques : réducteurs du moteur, boite de transmission principale et servitudes, transmission arrière, vibrations de structure.

De façon générale, le problème du bruit se pose sous deux aspects distincts:

- le bruit externe du giravion,

- le bruit interne, c'est-à-dire à l'intérieur d'une cabine de giravion.

Dans ces conditions, l'invention s'applique plus particulièrement à un procédé de minimisation du bruit externe généré par un dispositif anti-couple à rotor arrière caréné et concerne également, par voie de conséquence, un dispositif anti-couple à rotor arrière caréné obtenu selon ledit procédé. Bien entendu et de façon subséquente, le bruit interne est lui-même réduit.

Du point de vue du bruit externe, il est fondamental que le bruit produit à des distances faibles de la zone de décollage et d'atterrissage n'entraine pas une gêne trop importante.

De plus, l'utilisation d'un giravion en zone urbaine implique en outre le survol d'une zone habitée et par suite d'éventuelles nuisances sonores à l'égard de la population.

De même, l'utilisation d'un giravion à des fins militaires implique également une certaine considération sur les émissions acoustiques, le bruit permettant une détection prématurée d'un giravion et son identification.

En outre, on précise à titre informatif que l'architecture et la disposition d'un dispositif anti-couple à rotor arrière caréné, ses moyens d'entrainement en rotation et de commande collective du pas de ses pales ainsi que les avantages de ce type de réalisation ont été présentés dans de nombreux brevets d'invention de la demanderesse parmi lesquels on peut retenir les brevets français FR 1 531 536 et FR 2 534 222 décrivant des rotors à pales équi-réparties angulairement et correspondant respectivement d'une part à un moyen de changement de pas simultané de toutes les pales, et à des particularités diverses notamment à propos des pales et d'autre part un agencement combinant un rotor et un stator « redresseur » pour récupérer, sous forme de poussée axiale, l'énergie de rotation de l'écoulement d'air à l'aval du rotor.

Il importe encore de citer les brevets français FR 2 719 549, FR 2 719 550 et FR 2 719 551 de la demanderesse relatifs à un dispositif anti-couple à rotor arrière caréné qui comprend un rotor avec stator redresseur, les pales du rotor rotatif dans la veine carénée étant alors non équi-réparties angulairement. Plus précisément, lesdites pales ont une répartition angulaire selon une modulation azimutale irrégulière donnée par une loi sinusoïdale de façon à contribuer à une diminution du bruit occasionné par l'écoulement de l'air dans la veine.

Ces rappels étant formulés, il est établi que le bruit d'un rotor provient des charges aérodynamiques stables et fluctuantes agissant sur les pales. Ce bruit apparait lors d'une analyse du bruit à bande étroite, sous forme de fréquences discrètes multiples et sons multiples de la fréquence de passage de pales par rapport à une référence, plus simplement dite « fréquence de passage de pales ».

Autrement dit, la combinaison d'une vitesse de rotation $\Omega$ exprimée en Hertz, c'est-à-dire en tours par seconde, et d'un nombre donné b de pales plus élevé que sur un rotor arrière classique produit une fréquence de passage de pales ($b\Omega$) et ses multiples (« x » : signe de multiplication), sous la forme F suivante :

- pour un rotor à pales équi-réparties :

$$F = n \times b \times \Omega$$

n = nombre entier positif

- pour un rotor à pales non équi-réparties :

$$F = \left[(n \times b) \pm m\right] \times \Omega$$

n, m = nombres entiers positifs

Ce sont des fréquences beaucoup plus élevées de concentration de l'énergie acoustique que pour un rotor arrière classique, et typiquement dans le domaine de fréquences de 400 Hz à 2.000 Hz, la fréquence fondamentale étant située, en général, entre 400 Hz et 600 Hz avec des harmoniques de niveaux significatifs jusqu'à des rangs très élevés, le niveau acoustique de ces harmoniques augmentant, en principe, avec le nombre de Mach « hélicoïdal » à l'extrémité des pales (combinaison de la vitesse circonférentielle en extrémité des pales avec la vitesse axiale de l'écoulement d'air, c'est-à-dire sensiblement normale au plan de rotation des dites pales).

Les fréquences précitées, relatives à tout rotor anti-couple caréné sont très vite atténuées dans l'atmosphère. Cependant, le fait d'élever le niveau de fréquences de concentration d'énergie acoustique place lesdites fréquences dans une zone de fréquences de maximum de sensibilité pour l'oreille humaine. De plus, l'aspect très impulsif d'un spectre de bruit de rotor anti-couple caréné, pour lequel la majeure partie de l'énergie acoustique est concentrée sur les deux ou trois premières raies très étroites du spectre, se traduit par un sifflement pénible pour l'oreille humaine, qui est pénalisé par les critères de certification acoustique au moyen de « corrections de sons purs ou raies émergentes ».

La solution précitée consistant à disposer les pales non équi-réparties angulairement réalise une interférométrie acoustique qui évite de concentrer toute l'énergie acoustique essentiellement sur la fréquence fondamentale (niveau acoustique le plus élevé), voire quelques harmoniques, mais de répartir cette énergie acoustique sur des fréquences intermédiaires (entre 0 et b $\Omega$, entre b $\Omega$ et 2 b $\Omega$... par exemple), mieux tolérée par l'oreille humaine qui ne peut faire la distinction entre deux sons purs quand ils sont séparés de moins d'un tiers d'octave, d'où dans ce cas, une atténuation du sifflement.

Un but de l'invention est de proposer un procédé pour la réalisation d'un dispositif anti-couple à rotor arrière caréné de nuisances acoustiques minimales, destiné à équiper un giravion, notamment un hélicoptère propulsé au moyen d'un rotor principal, voire même en améliorant, la performance aérodynamique dudit dispositif éventuellement pourvu d'un stator redresseur, par rapport aux ensembles actuellement connus de ce type.

Par ailleurs, le procédé selon l'invention et le dispositif anti-couple à rotor arrière caréné ainsi obtenu permettent d'atteindre un autre but, à savoir mieux convenir aux diverses exigences de la pratique que les rotors anti-couple carénés connus, en particulier par rapport aux exigences de la réglementation pour certifier les aéronefs civils.

Dans ces conditions, on détermine selon le procédé conforme à l'invention des critères à respecter entre certains paramètres de conception d'un dispositif anti-couple à rotor arrière caréné et du giravion correspondant afin d'obtenir un dispositif anti-couple à rotor arrière caréné présentant un minimum de gêne au sens des Normes de bruit des giravions, notamment les hélicoptère, telles que celles qui expriment la gêne acoustique selon la notion de « Tone Perceived Noise Level » (plus simplement TPNL), exprimée en TPNdB, conformément aux recommandations réglementant la navigation des aéronefs, par exemple de :

- l'ICAO (International Civil Aviation Organization), annexe 16, ch.8 ;

- la FEDERAL AVIATION REGULATIONS (abréviation courante : FAR), PART 36, Appendix H, ch.18.

Les buts précités sont atteints selon l'invention, par un procédé selon lequel on optimise un dispositif anti-couple à rotor arrière caréné pour un giravion certifié à une vitesse d'avancement V, notamment un hélicoptère, comprenant un rotor multipale de diamètre D comportant un nombre donné b de pales à pas variable, monté rotatif avec une vitesse de rotation $\Omega$ et sensiblement coaxial dans une veine d'écoulement d'air d'axe sensiblement transversal au giravion et traversant une carène intégrée dans la partie arrière du giravion **caractérisé en ce que** l'on effectue les étapes suivantes :

- on sélectionne la fréquence limite inférieure FL d'un tiers d'octave prédéterminé, centré sur une fréquence centrée FC,

- on établit la fréquence perçue FP du son en affectant d'un coefficient multiplicatif C, tenant compte de l'effet Doppler, la fréquence d'émission FE du son produit par ledit dispositif anti-couple à rotor arrière caréné, soit :

$$FP = C \times FE$$

- on sélectionne les paramètres relatifs au diamètre D du rotor, au nombre donné b de pales et à la vitesse tangentielle U en extrémité des pales de sorte que la fréquence perçue FP du son, égale à $C \times [U \times (n \times b) \pm m]/(\pi \times D)$ soit inférieure à la fréquence limite inférieure FL d'un tiers d'octave prédéterminé, n et m désignant des nombres entiers positifs et le signe « / » correspondant à une division.

En effet et comme détaillé ultérieurement, il est établi, de manière conventionnelle, que les échelles en bandes d'octaves et en tiers d'octaves de fréquences s'utilisent pour représenter le spectre d'un bruit, chaque bande d'octaves se divisant en trois tiers d'octave. Par suite, la fréquence limite inférieure FL d'un tiers d'octave centré sur une fréquence centrée FC s'exprime par :

$$FL = \frac{FC}{\sqrt[6]{2}}$$

Par ailleurs, il importe de noter que la fréquence perçue FP d'un son est différente de la fréquence d'émission FE en raison de l'effet Doppler ou phénomène suivant lequel la fréquence apparente d'un mouvement vibratoire varie selon la vitesse relative de la source par rapport à un observateur. En pratique et si un giravion se dirige rapidement vers un observateur, il se fait que la fréquence perçue FP du son est plus élevée que la fréquence d'émission FE.

En conséquence, la conception d'un dispositif anti-couple à rotor arrière caréné, optimisé du point de vue d'une gêne acoustique externe minimale, prend en compte, selon l'invention, d'une part la vitesse d'avancement V de certification acoustique du giravion et d'autre part une température et un angle d'observation respectivement en dessous et au dessus desquels la fréquence perçue FP restera strictement inférieure à la fréquence limite inférieure FL du tiers d'octave prédéterminé. Autrement dit, les fréquences d'émission FE et perçue FP étant telles que :

$$FP = C \times FE$$

il est admis, comme précisé par la suite, que le coefficient multiplicatif C s'écrit :

$$C = \frac{1}{1 - (M \times \cos \theta e)}$$

Le terme M désigne le nombre de Mach de la source émettrice de bruit, c'est-à-dire le dispositif anti-couple, se déplaçant à une vitesse d'avancement V, soit si le terme « a » désigne la célérité du son à une température donnée :

$$M = \frac{V}{a}$$

Le terme $\theta e$ correspond à l'angle formé entre la vitesse d'avancement V et l'axe « source-observateur ».
A titre explicatif, on note que l'expression de la fréquence de passage de pales est bien identique à la fréquence d'émission FE du son telle que précédemment écrite. En effet :

$$F = \left[(n \times b) \pm m\right] \times \Omega \quad, \text{ F et } \Omega \text{ en Hz}$$

$$= \frac{\omega}{2\pi}\left[(n \times b) \pm m\right] , \text{ } \omega \text{ en rd/s}$$

avec :

$$U = \omega \times \frac{D}{2} \quad,$$

D en m et U en m/s
soit:

$$F = FE$$

En résumé, la sélection des paramètres D, U et b doit respecter le critère ci-après :

$$\frac{U \times \left[(n \times b) \pm m\right]}{D} < \frac{\pi \times FC}{\sqrt[6]{2}} \times \left[1 - \left(\frac{V}{a} \times \cos \theta e\right)\right]$$

Avantageusement, on applique ce critère de la façon préférentielle suivante :

- on sélectionne seulement le fondamental du spectre, soit n=1 et m=0 ;

- on retient le tiers d'octave prédéterminé correspondant à une fréquence centrée FC de 500Hz, cette fréquence correspondant à des limites normatives comme expliqué ultérieurement ;

- on détermine une vitesse d'avancement V correspondant à la vitesse de certification du bruit du giration, soit par exemple :

$$V = \left(0,45 \times VH\right) + 65 \text{kts}$$

VH étant la vitesse maximale du giravion à masse maximale à 25°C et à « altitude-pression » nulle ;

- on sélectionne θe entre 30 et 45 degrés ;

- on retient une température de l'air comprise entre 15°C et 25°C, de préférence 25°C soit alors une célérité du son de 346 m/s.

Bien entendu, cette application préférentielle n'est nullement exclusive, mais adaptable notamment en fonction des exigences réglementaires.

La présente invention concerne également un dispositif anti-couple à rotor arrière caréné pour le contrôle et le pilotage en lacet d'un giravion.

Selon l'invention, ce dispositif anti-couple pour un giravion, certifié acoustiquement à une vitesse d'avancement V, notamment un hélicoptère, comprenant un rotor multipale de diamètre D comportant un nombre donné b de pales à pas variable, monté rotatif et sensiblement coaxial dans une veine d'écoulement d'air d'axe sensiblement transversal au giravion et traversant une carène intégrée dans la partie arrière du giravion est remarquable en ce que les paramètres relatifs au diamètre D du rotor, au nombre donné b de pales et à la vitesse tangentielle U en extrémité des pales sont tels que :

$$\frac{U \times [(n \times b) \pm m]}{D} < \frac{\pi \times FC}{\sqrt[6]{2}} \left[ 1 - \left( \frac{V}{a} \times \cos\theta e \right) \right]$$

où n et m désignent des nombres entiers positifs, FC étant la fréquence centrée d'un tiers d'octave prédéterminé et les termes « a » et «θe» représentant respectivement la vitesse du son et l'angle compris entre la vitesse V et l'axe dispositif anti-couple (source du bruit) - observateur.

De façon avantageuse et préférentielle, il se fait que :

- l'entier n est égale à 1 ;

- la fréquence centrée FC est de 500 Hz ;

- la vitesse d'avancement V du giravion, si VH désigne la vitesse maximale de ce giravion, vaut [(0,45×VH)+65kts] ;

- l'angle θe est compris entre 30 et 45 degrés ;

- la température de l'air est comprise entre 15°C et 25°C, de préférence 25°C, soit une célérité du son de 346 m/s.

Avantageusement, un dispositif anti-couple à rotor arrière caréné peut également comprendre un stator redresseur à aubes fixes profilées en aval du rotor dans la veine formée par le carénage ce qui permet de réaliser un dispositif anti-couple, compact, équilibré et rigide procurant, sans modification de la puissance d'entrainement du rotor, une poussée anti-couple accrue avec une minimisation de la gêne acoustique.

L'invention et ses avantages apparaitront avec plus de détails dans le cadre de la description qui suit avec un exemple de réalisation donné à titre illustratif en référence aux figures annexées qui représentent :

- la figure 1, une vue en perspective de ¾ arrière d'un dispositif anti-couple caréné, avec rotor et stator redresseur disposés sans une veine traversant une carène à l'extrémité arrière de la poutre de queue et à la base de l'empennage d'un hélicoptère, le rotor étant représenté sorti de la veine avec arrachement partiel, pour plus de clarté,

- la figure 2, une vue schématique en élévation latérale du rotor et du stator de la figure 1 avec une modulation azimutale irrégulière des pales,

- la figure 3, une illustration du spectre de bruit d'un hélicoptère équipé d'un rotor arrière caréné en phase de survol pour une certification au bruit, montrant l'émergence du son pur correspondant au son fondamental,

- la figure 4, un schéma relatif à un octave de fréquences,

- la figure 5, un schéma relatif à un tiers d'octave de fréquences,

- la figure 6, un schéma représentatif d'une émergence de son pur dans un tiers d'octave,

- la figure 7, un exemple d'une émergence de son pur,

- les figures 8a et 8b, respectivement les corrections de son pur d'une part pour des fréquences inférieure à 500 Hz et supérieure à 5000 Hz et d'autre part pour des fréquences égale ou supérieure à 500 Hz et inférieure ou égale à 5000 Hz,

- la figure 9, un exemple des nuisances acoustiques (gênes acoustiques) exprimées en Noys pour un niveau sonore de 75 dB,

- la figure 10, un schéma du procédé selon l'invention,

- la figure 11, une illustration de l'effet Doppler,

- la figure 12, un abaque représentatif de l'utilisation du critère de minimisation du bruit selon l'invention.

Les éléments présents dans plusieurs figures distinctes sont affectés d'une seule et même référence.

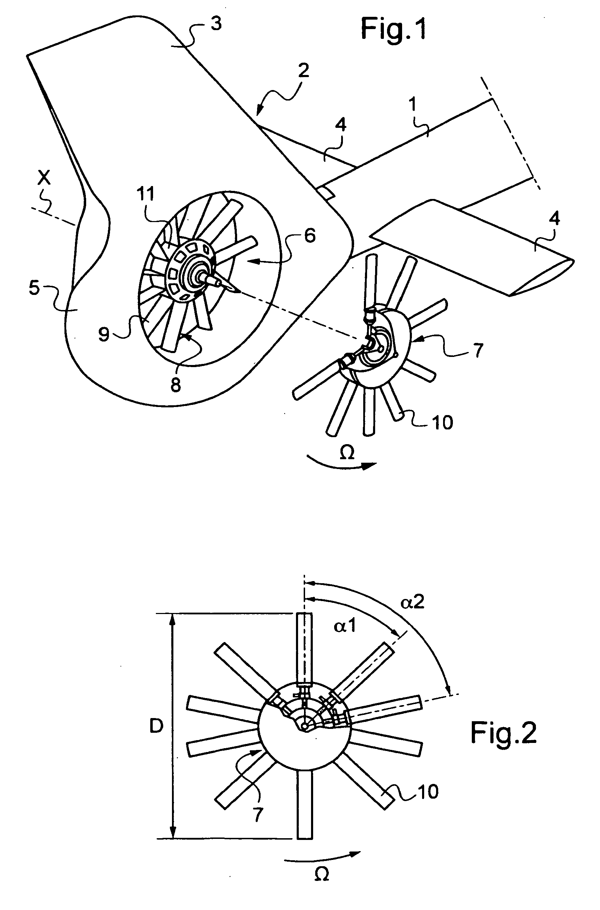

La poutre de queue 1, montrée sur la figure 1, d'un hélicoptère dont le fuselage et l'unique rotor principal ne sont pas représentés, supporte, à son extrémité arrière, une dérive verticale 3, pour aider au contrôle en lacet, et, à l'avant une dérive horizontale à deux plans 4 s'étendant de part et d'autre de la poutre 1, pour aider au contrôle en tangage de l'hélicoptère.

La base de la dérive verticale 3 est agencée en carène 5, traversée transversalement par une veine 6 d'écoulement d'air d'un dispositif anti-couple caréné 2 comprenant également un rotor 7 multipale de diamètre D et ayant un nombre donné b de pales 10 à pas variable, monté rotatif avec une vitesse angulaire de rotation $\Omega$ et sensiblement coaxial dans la veine 6, ainsi qu'un stator redresseur 8, fixé dans la veine 6 en aval du rotor 7, par rapport au sens d'écoulement du flux d'air traversant la veine 6, et comportant des aubes fixes 9 disposées sensiblement en étoile autour de l'axe X-X de la veine 6.

Pour un rotor ayant un nombre donné b de pales 10, un exemple de modulation de phase ou azimutale irrégulière est représenté sur la figure 2 ($\alpha2$ différent de $2\times\alpha1$ et b=10). Le but de cette modulation de phase est de rompre la symétrie angulaire habituelle ou l'équi-répartition angulaire habituelle des pales d'un rotor, afin non pas de réduire l'énergie acoustique émise, mais de la répartir plus favorablement sur le spectre de fréquence, contrairement à ce qui est obtenu en l'absence de modulation (pales équi-réparties), à savoir une concentration de l'énergie sur des fréquences particulières (b$\Omega$, 2b$\Omega$, 3b$\Omega$ ... : on comprend que par raison de simplification $\Omega$ est multiplié respectivement par b, 2b, 3b...).

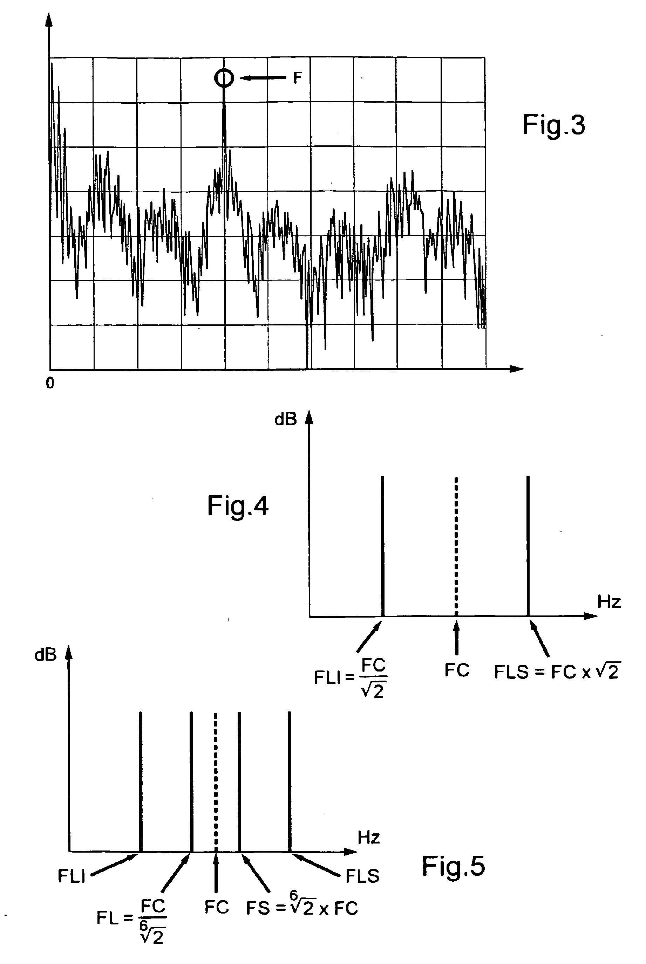

Un tel dispositif anti-couple à rotor arrière caréné est en général une source de nuisances sonores du fait de l'émission d'un son pur émergeant du spectre de bruit de l'hélicoptère complet (ou du giravion) comme illustré par la figure 3 (fréquences en Hz en abscisses et niveau de bruit en dB ou décibel en ordonnées). Ce son pur repéré par une flèche f correspond au son fondamental dont la fréquence vaut b$\Omega$.

Pour obtenir la certification d'un giravion, des mesures acoustiques sont rendues nécessaires pour évaluer le bruit produit par l'appareil. Dans ces conditions, le niveau de bruit de sons purs mesuré dans certaines bandes de fréquence du spectre audible entraine l'application de pénalités calculées en fonction du caractère émergent des sons purs dans le spectre de bruit pour tenir compte de la gêne provoquée par ces sons.

Plus précisément, on rappelle que le spectre est la représentation des niveaux sonores en fonction de la fréquence et le bruit est la superposition de sons de niveaux et de fréquences différents. Le niveau de bruit, exprimé en dB (décibel) pour chaque fréquence, représente le spectre de bruit.

De manière conventionnelle, on utilise des échelles en bandes d'octaves ou « octaves » et en tiers d'octaves de fréquences pour représenter le spectre d'un bruit. En principe, on prend en compte les fréquences jusqu'à au moins 10.000 Hz regroupées en bandes d'octaves centrées par exemple sur 63, 125, 250, 500, 1.000, 2.000, 4.000 et 8.000 Hz. Chaque bande d'octave se divise en trois tiers d'octave de manière logarithmique.

Par définition et selon la figure 4, la fréquence limite supérieure FLS d'un octave centré sur une fréquence centrée FC est égale au double de la fréquence limite inférieure FLI de cet octave, soit :

$$FLI = \frac{FLS}{2}$$

avec, toujours par définition :

$$FLI = \frac{FC}{\sqrt{2}}$$

$$FLS = \sqrt{2} \times FC$$

Alors, si FL et FS désignent respectivement les fréquences limites inférieure et supérieure d'un tiers d'octave centré sur la fréquence FC (figure 5), on définit les relations suivantes :

$$FL = k^2 \times FLI$$

$$FC = k \times FL$$

$$FS = k \times FC$$

$$FLS = k^2 \times FS = k^6 \times FLI$$

avec :

$$FLS = 2 \times FLI$$

soit :

$$k = \sqrt[6]{2}$$

Il en résulte que la limite inférieure FL du tiers d'octave centré sur la fréquence FC vaut :

$$FL = \frac{FC}{k} = \frac{FC}{\sqrt[6]{2}}$$

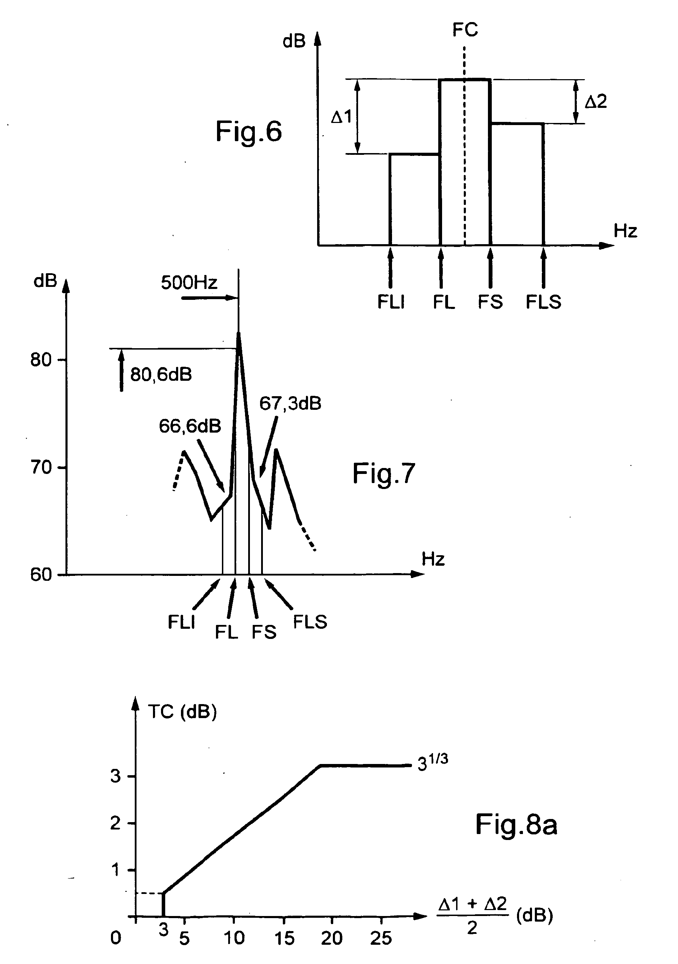

Sur ces bases, l'homme du métier détermine l'émergence d'un son pur comme indiqué sur la figure 6, c'est-à-dire par la quantité (Δ1 1 + Δ2)/2.

A titre illustratif, il s'avère d'après la figure 7 que l'émergence, relative à cet exemple, vaut :

$$\frac{\Delta 1 + \Delta 2}{2} = 80,6 - \left[ (67,3 + 66,6)/2 \right] = 13,65\,dB$$

sachant que présentement les valeurs 66,6 et 67,3 dB sont les niveaux sonores des tiers d'octaves respectivement inférieur et supérieur au tiers d'octave du niveau sonore de 80,6 dB relatif à un son pur d'une fréquence de 500 Hz.

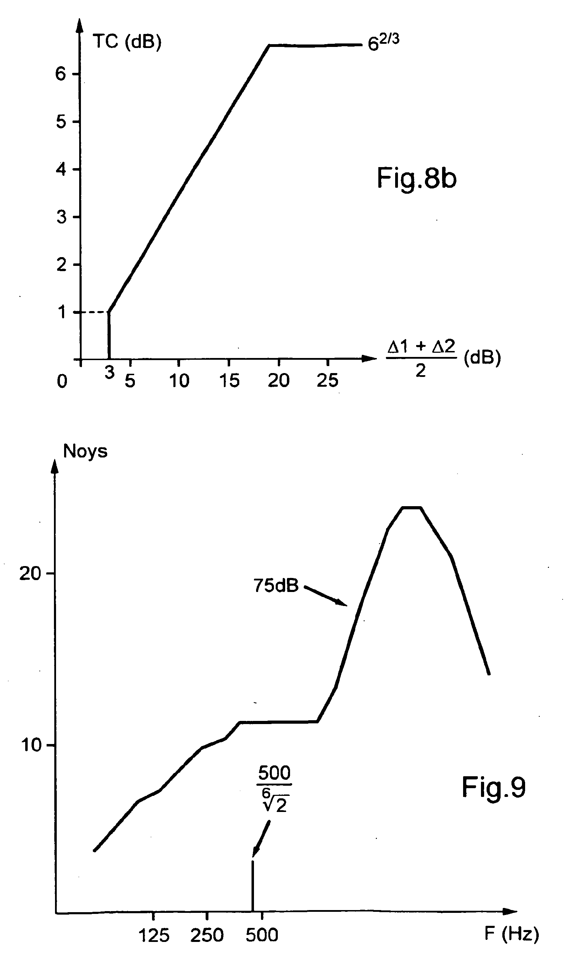

Les figures 8a et 8b fournissent à titre d'exemple les pénalités (ou corrections de son pur TC) à appliquer selon les recommandations de l'ICAO à savoir :

- la figure 8a concerne les corrections de son pur TC à appliquer en fonction de l'émergence d'un son pur à des fréquences Fr d'un tiers d'octave telles que :

$$Fr < 500\ Hz$$

## Fr > 5000 Hz

La correction est alors au maximum de $3^{1/3}$ dB.

- la figure 8b concerne les corrections de son pur TC à appliquer en fonction de l'émergence d'un son pur à des fréquences Fr d'un tiers d'octave telles que :

## 500 Hz ≤ Fr ≤ 5000 Hz

La correction est alors au maximum de $6^{2/3}$, soit le double de celle correspondant à la figure 8a.

Par rapport à la figure 7, la correction de son pur serait donc de 4,55 dB d'après la figure 8b ce qui pénalise nettement le giravion du point de vue de sa certification acoustique.

En effet, la correction de son pur TC génère une pénalité qui se superpose au niveau de bruit PNL (« Perceived Noise Level ») exprimé dans les unités PNdB, d'où l'expression du « Tone Perceived Noise Level » ou « niveau de bruit TPNL» exprimé dans les unités TPNdB :

## TPNdB = PNdB+TC

Il n'y a pas lieu de détailler ici le calcul du niveau de bruit PNL, sinon de signaler succinctement la démarche :

- on découpe l'historique du bruit en tronçons réguliers (en général de 0,5 seconde) et on calcule le tiers d'octave associé,

- pour chaque spectre d'octave, on calcule le niveau PNL,

- on affecte à chaque tiers d'octave une nuisance exprimée en « Noys », fonction de la fréquence et du niveau en dB du tiers d'octave et on obtient un « spectre de Noys » pour lequel une valeur maximale de Noys, dite Noymax correspond dans l'exemple de la figure 7 à une fréquence émise par le dispositif anti-couple,

- on calcule le niveau PNL selon une formulation du type :

$$PNdB = 40 + \frac{10}{\log 2} \log(0,15 \sum Noys + 0,85 Noymax)$$

Cette démarche conduit par exemple à définir un niveau TPNL de 104,1 dB sachant qu'alors le niveau PNL (sans correction de son pur) est égal à 99,5 PNdB dans le cas ci-dessus exposé.

Comme explicité précédemment, on comprend l'intérêt de l'invention consistant à concevoir un dispositif anti-couple à rotor arrière caréné de façon à ce que la correction de son pur TC soit inférieure ou égale à $3^{1/3}$ dB (fréquence inférieure à 500 Hz).

A ce propos, il est très important de rappeler qu'une augmentation de 3 dB par exemple d'un niveau sonore correspond à un doublement de la moyenne de l'énergie acoustique instantanée (effectuée sur un intervalle de temps Δt), ce qui est considérable de sorte qu'une minimisation de la pénalité (correction de son pur) est toujours à rechercher.

Par ailleurs, l'examen de la figure 9 correspondant à :

- des fréquences tiers d'octave en Hz en abscisse,

- les nuisances représentatives de la gêne acoustique exprimée en Noys en ordonnée,

- un exemple de tracé relatif à un niveau de 75 dB du tiers d'octave contenant le son pur détecté,

montre de façon suffisamment explicite qu'il convient, en termes de nuisances, de réduire autant que possible la fréquence d'un son pur, à l'instar du constat précédent concernant la correction de son pur induisant une pénalité.

Selon le brevet FR 2 719 549, il a été établi qu'un espacement angulaire irrégulier des pales du rotor d'un dispositif anti-couple pour un giravion, selon une loi sinusoïdale, diminue le niveau de bruit sur la raie correspondant au « son fondamental de pales », dont la fréquence est égale à la fréquence de rotation du rotor multipliée par le nombre de pales.

Une telle répartition angulaire inégale des pales peut cependant provoquer une augmentation du niveau du bruit pour d'autres raies dont la fréquence est liée à la fréquence de rotation par la relation :

$$F = [(n \times b) \pm m] \times \Omega .$$

Ainsi, même si le niveau de bruit pour la fréquence $b\Omega$ de passage de pales est peu émergent du spectre de bruit et/ou si cette fréquence n'est pas située dans une plage de fréquence dans laquelle la pénalité applicable est élevée, une pénalité élevée peut résulter d'une raie émergente correspondant à une fréquence harmonique du son fondamental de pales ou à une fréquence de modulation située entre deux de ces harmoniques.

Par suite, une solution générale répondant à ces problèmes est proposée par l'invention.

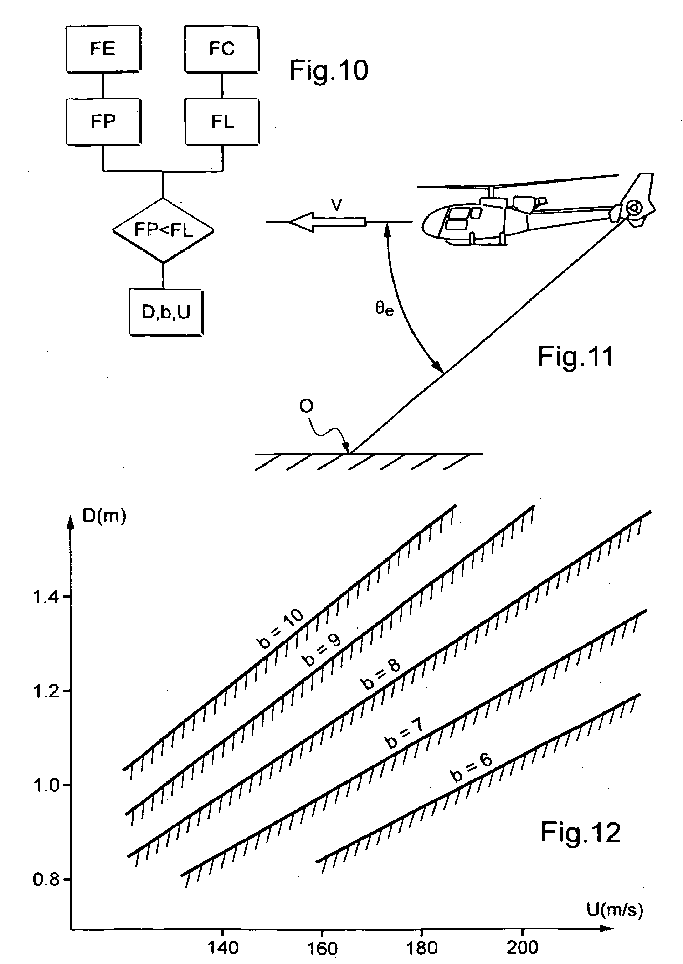

A cet effet, le procédé selon l'invention et conformément à la figure 10, pour l'optimisation d'un dispositif anti-couple à rotor arrière caréné pour un giravion certifié au bruit à une vitesse d'avancement, est **caractérisé en ce que** l'on réalise les étapes suivantes :

- on sélectionne la fréquence limite inférieure FL d'un tiers d'octave prédéterminé, centré sur une fréquence FC,

- on établit la fréquence perçue FP du son en affectant d'un coefficient multiplication C, tenant compte de l'effet Doppler, la fréquence d'émission FE du son produit par ledit dispositif anti-couple à rotor arrière caréné, soit :

$$FP = C \times FE$$

- on sélectionne les paramètres relatifs au diamètre D du rotor, au nombre donné de pales et à la vitesse tangentielle U en extrémité des pales de sorte que la fréquence perçue FP du son égale à $C \times [U \times (n \times b) \pm m]/(\pi \times D)$ soit inférieure à la fréquence limite inférieure FL d'un tiers d'octave prédéterminé, n et m désignant des nombres entiers positifs et le signe « / » correspondant à une division.

Dans ces conditions, la fréquence limite inférieure FL d'un tiers d'octave centré sur une fréquence FC s'exprime par :

$$FL = \frac{FC}{\sqrt[6]{2}}$$

Par ailleurs, la fréquence perçue FP tient compte de l'effet Doppler, comme vu précédemment, et s'exprime par la relation :

$$FP = C \times FE$$

D'après la figure 11, le coefficient C s'écrit comme suit :

$$C = \frac{1}{1 - (M \times \cos\theta_e)}$$

Le terme M désigne le nombre de Mach de la source émettrice de bruit, c'est-à-dire le dispositif anti-couple, se déplaçant à une vitesse V, soit si le terme « a » désigne la célérité du son à une température donnée :

$$M = \frac{V}{a}$$

Le terme θe correspond à l'angle formé entre la vitesse V et l'axe « source-observateur », l'observateur étant 0 sur la figure 11.

En résumé, la sélection des paramètres D, U et b doit respecter le critère ci-après :

$$\frac{U \times [(n \times b) \pm m]}{D} < \frac{\pi \times FC}{\sqrt[6]{2}} \times \left[ 1 - \left( \frac{V}{a} \times \cos\theta e \right) \right]$$

Avantageusement, on applique ce critère de la façon préférentielle suivante :

- on sélectionne seulement le fondamental du spectre, soit n=1 et m=0 ;

- on retient le tiers d'octave prédéterminé correspondant à une fréquence centrée FC de 500Hz, cette fréquence correspondant à des limites normatives comme expliqué par ailleurs ;

- on détermine une vitesse V correspondant à la vitesse de certification du bruit du giravion, soit par exemple [V et VH exprimés en noeuds (kts)] :

$$V = (0{,}45 \times VH) + 65\text{kts}$$

VH étant la vitesse maximale du giravion ;

- on sélectionne θe entre 30 et 45 degrés ;

- on retient une température de l'air comprise entre 15°C et 25°C, de préférence 25°C, soit une célérité du son de 346 m/s.

Une application numérique de la condition sus-mentionnée exprimant que la fréquence FP est inférieure à la fréquence FL conduit aux résultats suivants pour lesquels la fréquence centrée FC, la vitesse V, la température extérieure et l'angle θe sont respectivement égaux à 500 Hz, 68 m/s, 25°C (standard) et 30 degrés:

- a = 346 m/s

- $C = 1{,}2051 \rightarrow \dfrac{1}{C} = 0{,}8298$

- $\dfrac{U \times n \times b}{D} < 1161\text{Hz}$

Ce résultat se traduit pour n=1 par la représentation de la figure 12 où les combinaisons D, b et U impossibles vis-à-vis du critère ci-dessus sont dans la zone hachurée propre à chaque valeur de b. En d'autres termes, pour chaque valeur de b, les combinaisons D et U sont impossibles dans la zone comprise entre la droite relative à ladite valeur de b et l'axe des abscisses (valeurs de U).

La présente invention concerne également un dispositif anti-couple à rotor arrière caréné pour le contrôle et le pilotage en lacet d'un giravion.

La poutre de queue 1, montrée sur la figure 1, d'un hélicoptère certifié au bruit à une vitesse d'avancement V dont le fuselage et l'unique rotor principal ne sont pas représentés, supporte comme déjà précisé, à son extrémité arrière une dérive verticale 3, pour aider au contrôle en lacet, et à l'avant une dérive horizontale 4 à deux plans s'étendant de part et d'autre de la poutre 1, pour aider au contrôle en tangage de l'hélicoptère.

La base de la dérive verticale 3 est agencée en carène 5, traversée transversalement par une veine 6 d'écoulement d'air d'un dispositif anti-couple caréné 2 comprenant également un rotor 7 multipale de diamètre D et à un nombre donné b de pales 10 à pas variable, monté rotatif avec une vitesse de rotation $\Omega$ et sensiblement coaxial dans la veine 6, ainsi qu'un stator redresseur 8, fixé dans la veine 6 en avant du rotor 7, par rapport au sens d'écoulement du flux d'air traversant la veine 6, et comportant des aubes fixes 9 disposées sensiblement en étoile autour de l'axe x-x de la veine 6.

En référence à la figure 1, ce dispositif anti-couple 2 est remarquable en ce que les paramètres relatifs au diamètre D du rotor, au nombre donné b de pales donné et à la vitesse tangentielle U en m/s égale à $\pi \times D \times \Omega$ en extrémité des pales sont tels que :

$$\frac{U \times \left[(n \times b) \pm m\right]}{D} < \frac{\pi \times FC}{\sqrt[6]{2}} \left[1 - \left(\frac{V}{a} \times \cos \theta e\right)\right]$$

où n et m désignent des nombres entiers positifs, FC étant la fréquence centrée d'un tiers d'octave prédéterminé, les termes a et $\theta e$ représentant respectivement la vitesse du son et l'angle compris entre la vitesse V et l'axe dispositif anti-couple (source du bruit) - observateur.

De façon avantageuse et préférentielle, il se fait que :

- l'entier n est égal à 1,

- la fréquence centrée FC est de 500 Hz,

- la vitesse V du giravion, si VH désigne la vitesse maximale de ce giravion, vaut [(0,45 x VH) + 65 kts],

- l'angle $\theta e$ est compris entre 30 et 45 degrés,

- la température de l'air est comprise entre 15°C et 25°C, de préférence de 25°C, soit une célérité du son de 340,26 m/s.

Avantageusement, le dispositif anti-couple 2 à rotor arrière caréné peut également comprendre un stator redresseur 8 fixé dans la veine 6, en aval du rotor 7, par rapport au sens d'écoulement du flux d'air traversant la veine 6, et comportant des aubes fixes 9 disposées sensiblement en étoile autour de l'axe x-x de la veine 6.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé d'optimisation d'un dispositif anti-couple (2) pour un giravion certifié au bruit à une vitesse d'avancement comprenant un rotor arrière caréné (7) multipale de diamètre V, comportant un nombre b de pales donné (10) à pas variable, monté rotatif avec une vitesse de rotation $\Omega$ et sensiblement coaxial dans une veine (6) d'écoulement d'air d'axe sensiblement transversal au giravion et traversant une carène intégrée (5) dans la partie arrière du giravion, **caractérisé en ce que** l'on effectue les étapes suivantes:

- on sélectionne la fréquence limite inférieure FL d'un tiers d'octave prédéterminé, centré sur une fréquence centrée FC,
- on établit la fréquence perçue FP du son en affectant d'un coefficient multiplicatif C, tenant compte de l'effet Doppler, la fréquence d'émission FE du son produit par ledit dispositif anti-couple à rotor arrière caréné, soit :

$$FP = C \times FE$$

- on sélectionne les paramètres relatifs au diamètre D du rotor, au nombre donné b de pales et à la vitesse tangentielle U en extrémité des pales de sorte que la fréquence perçue FP du son égale à C×[U×(n×b)±m]/(π×D) soit inférieure à la fréquence limite inférieure FL d'un tiers d'octave prédéterminé centré sur une fréquence FC, n et m désignant des nombres entiers positifs.

2. Procédé selon la revendication 1,
   **caractérisé en ce que** ledit coefficient C est tel que :

$$C = \frac{1}{1 - (M \times \cos\theta e)}$$

expression dans laquelle d'une part M désigne le nombre de Mach de la source émettrice de bruit, c'est-à-dire le dispositif anti-couple, se déplaçant à une vitesse d'avancement V, le nombre de Mach étant égal au rapport V/a avec a représentant la célérité du son, et d'autre part θe désigne l'angle formé entre la vitesse d'avancement V et l'axe source du bruit-observateur.

3. Procédé selon la revendication 2,
   **caractérisé en ce que** on retient une plage de températures comprise ente 15°C et 25°C pour déterminer la célérité du son.

4. Procédé selon l'une quelconque des revendications 2 ou 3,
   **caractérisé en ce que** on sélectionne ledit angle θe dans une plage comprise entre 30 degrés et 45 degrés.

5. Procédé selon l'une quelconque des revendications 2 à 4,
   **caractérisé en ce que** la vitesse d'avancement V exprimée en noeuds est égale à V=(0,45×VH)+65kts, VH étant la vitesse maximale du giravion .

6. Procédé selon l'une quelconque des revendications 1 à 5,
   **caractérisé en ce que** ladite fréquence centrée FC est égale à 500 Hz.

7. Procédé selon l'une quelconque des revendications 1 à 6,
   **caractérisé en ce que** les nombres entiers n et m valent respectivement 1 et 0.

8. Dispositif anti-couple (2), acoustiquement optimisé, pour un giravion certifié au bruit à une vitesse d'avancement V, comprenant un rotor arrière caréné (7) multipale de diamètre D comportant un nombre donné b de pales (10) à pas variable, monté rotatif avec une vitesse de rotation Ω et sensiblement coaxial dans une veine (6) d'écoulement d'air d'axe sensiblement transversal au giravion et traversant une carène intégrée (5) dans la partie arrière du giravion,
   **caractérisé en ce que** les paramètres relatifs au diamètre D du rotor, au nombre donné b de pales et à la vitesse tangentielle U, égale à Ω x (D x 2), en extrémité des pales sont tels que:

$$\frac{U \times [(n \times b) \pm m]}{D} < \frac{\pi \times FC}{\sqrt[6]{2}} \left[ 1 - \left( \frac{v}{a} \times \cos\theta e \right) \right]$$

où n et m désignent des nombres entiers positifs, FC étant la fréquence centrée d'un tiers d'octave prédéterminé, a et θe représentant respectivement la vitesse du son et l'angle compris entre la vitesse d'avancement V et l'axe dispositif anti-couple c'est à dire la source du bruit, - observateur.

9. Dispositif selon la revendication 8,
   **caractérisé en ce que** la célérité du son a est comprise dans une plage relative à une température externe comprise entre 15°C et 25°C.

10. Dispositif selon l'une quelconque des revendications 8 à 9,
    **caractérisé en ce que** ledit angle θe est compris dans une plage entre 30 degrés et 45 degrés.

11. Dispositif selon l'une quelconque des revendications 8 à 10,
    **caractérisé en ce que** la vitesse d'avancement V exprimée en noeuds est égale à [(0,45×VH)+65kts], VH désignant la vitesse maximale d'avancement du giravion.

12. Dispositif selon l'une quelconque des revendications 8 à 11,
    **caractérisé en ce que** la fréquence centrée FC est égale à 500 Hz.

13. Dispositif selon l'une quelconque des revendications 8 à 12,
    **caractérisé en ce que** ledit dispositif anti-couple (2) à rotor arrière caréné comprend un stator redresseur (8) fixé dans la veine (6), en aval du rotor (7) par rapport au sens d'écoulement du flux d'air traversant la veine (6), et comportant des aubes fixes (9) disposées sensiblement en étoile autour de l'axe x-x de la veine (6).

**Claims**

1. Method of optimising an anti-torque device (2) for a rotorcraft which is noise-certified at a forward speed V, comprising a multi-blade ducted tail rotor (7) of diameter D which has a given number b of variable-pitch blades (10) and is mounted rotatably with a rotational speed Ω and substantially coaxially in an air flow duct (6) of axis substantially transverse to the rotorcraft and passing through a fairing (5) integrated in the tail part of the rotorcraft,
   **characterised in that** the following steps are carried out:

   - the lower limit frequency FL of a predetermined one-third octave centred at a centred frequency FC is selected,
   - the perceived frequency FP of the sound is established by modifying by a multiplying coefficient C, taking account of the Doppler effect, the emission frequency FE of the sound produced by the said anti-torque device with ducted tail rotor, i.e.:

   $$FP = C \times FE$$

   - the parameters relating to the diameter D of the rotor, the given number b of blades and the tangential speed U at the tip of the blades are selected, so that the perceived frequency FP of the sound equal to $C \times [U \times (nxb) \pm m]/(\pi \times D)$ is less than the lower limit frequency FL of a predetermined one-third octave centred at a frequency FC, n and m denoting positive integers.

2. Method according to Claim 1,
   **characterised in that** the said coefficient C is such that:

   $$C = \frac{1}{1 - (M \times \cos\theta e)}$$

   in which expression, on the one hand, M denotes the Mach number of the noise-emitting source, that is to say the anti-torque device, moving at a forward speed V, the Mach number being equal to the ratio V/a with a representing the speed of sound, and, on the other hand, θe denotes the angle formed between the forward speed V and the noise source-observer axis.

3. Method according to Claim 2,
**characterised in that** a temperature range of between 15°C and 25°C is selected for determining the speed of sound.

4. Method according to either one of Claims 2 and 3,
**characterised in that** the said angle θe is selected from a range of between 30 degrees and 45 degrees.

5. Method according to any one of Claims 2 to 4, **characterised in that** the forward speed V expressed in knots is equal to V=(0.45×VH)+65kts, VH being the maximum speed of the rotorcraft.

6. Method according to any one of Claims 1 to 5,
**characterised in that** the said centred frequency FC is equal to 500 Hz.

7. Method according to any one of Claims 1 to 6,
**characterised in that** the integers n and m are 1 and 0, respectively.

8. Acoustically optimised anti-torque device (2) for a rotorcraft which is noise-certified at a forward speed V, comprising a multi-blade ducted tail rotor (7) of diameter D which has a given number b of variable-pitch blades (10) and is mounted rotatably with a rotational speed Ω and substantially coaxially in an air flow duct (6) of axis substantially transverse to the rotorcraft and passing through a fairing (5) integrated in the tail part of the rotorcraft,
**characterised in that** the parameters relating to the diameter D of the rotor, the given number b of blades and the tangential speed U, equal to Q×(D×2), at the tip of the blades are such that:

$$\frac{U \times [(n \times b) \pm m]}{D} < \frac{\pi \times FC}{\sqrt[6]{2}} \left[ 1 - \left( \frac{v}{a} \times \cos \theta e \right) \right]$$

where n and m denote positive integers, FC being the centred frequency of a predetermined one-third octave, a and θe representing respectively the speed of sound and the angle between the forward speed V and the anti-torque device, i.e. noise source,-observer axis.

9. Device according to Claim 8,
**characterised in that** the speed of sound a is in a range relating to an external temperature of between 15°C and 25°C.

10. Device according to either one of Claims 8 and 9,
**characterised in that** the said angle θe is in a range of between 30 degrees and 45 degrees.

11. Device according to any one of Claims 8 to 10,
**characterised in that** the forward speed V expressed in knots is equal to [(0.45×VH)+65kts], VH denoting the maximum forward speed of the rotorcraft.

12. Device according to any one of Claims 8 to 11,
**characterised in that** the centred frequency FC is equal to 500 Hz.

13. Device according to any one of Claims 8 to 12,
**characterised in that** the said anti-torque device (2) with ducted tail rotor comprises a rectifying stator (8) fixed in the duct (6), downstream of the rotor (7) in relation to the flow direction of the air flow passing through the duct (6), and having fixed vanes (9) arranged substantially in a star configuration about the axis x-x of the duct (6).

**Patentansprüche**

1. Optimierungsverfahren für einen bei einer Vorwärtsgeschwindigkeit V zertifizierten Heckrotor (2) eines Drehflügelflugzeugs, der einen verkleideten Heckrotor (7) mit mehreren Rotorblättern mit einem Durchmesser D aufweist, der eine vorbestimmte Anzahl b von Rotorblätter (10) mit variabler Schrägstellung aufweist, die mit einer Drehgeschwindigkeit Ω drehbar gelagert sind und im Wesentlichen koaxial in einem Luftströmungskanal (6) angeordnet sind, der im Wesentlichen quer zur Längsachse des Drehflügelflugzeugs verläuft und eine Verkleidung (5) durchquert, die im hinteren Teil des Drehflügelflugzeugs integriert ist,
**dadurch gekennzeichnet, dass** folgende Schritte durchgeführt werden:

- Es wird eine untere Grenzfrequenz FL eines Drittels einer vorbestimmten Oktave ausgewählt, die auf einer zentrierten Frequenz FC zentriert ist,
- es wird die wahrgenommene Frequenz FP des Geräuschs bestimmt durch dessen Beaufschlagung mit einem Multiplikationskoeffizienten C, unter Berücksichtigung des Dopplereffekts, wobei die Immissionsfrequenz FE des von dem verkleideten Heckrotor erzeugten Lärms folgende Gleichung erfüllt:

$$FP = C \times FE$$

- es werden die Parameter ausgewählt, die den Durchmesser D des Rotors, die vorbestimmte Anzahl b der Rotorblätter und die Tangentialgeschwindigkeit U an den freien Enden der Rotorblätter betreffen festgelegt, derart, dass die wahrgenommene Frequenz FP des Lärms gemäß der Formel C x [U x(n x b) $\pm$ m] / (π x D) kleiner ist als die untere Grenzfrequenz FL des Drittels einer vorbestimmten auf einer Frequenz FC zentrierten Oktave ist, wobei n und m ganze positive Zahlen darstellen.

2. Optimierungsverfahren nach Anspruch 1,
   **dadurch gekennzeichnet, dass** der Koeffizient C folgende Gleichung erfüllt:

$$C = \frac{1}{1 - (M x \cos \theta e)},$$

wobei in diesem Ausdruck M die Mach-Zahl der Lärmquelle bezeichnet, das heißt der Anti-Drehmomentvorrichtung, die sich mit einer Vorwärtsgeschwindigkeit V bewegt, wobei die Mach-Zahl gleich dem Verhältnis V / a ist, wobei a die Schallgeschwindigkeit bezeichnet und andererseits θe den Winkel bezeichnet, zwischen der Vorwärtsgeschwindigkeit V und der Achse der Quelle des wahrgenommenen Lärms.

3. Optimierungsverfahren nach Anspruch 2,
   **dadurch gekennzeichnet, dass** die Schallgeschwindigkeit in einem Temperaturbereich von 15 °C bis 25 °C bestimmt wird.

4. Optimierungsverfahren nach einem der Ansprüche 2 oder 3,
   **dadurch gekennzeichnet, dass** der Winkel θe zwischen 30 ° und 45 °gewählt wird.

5. Optimierungsverfahren nach einem der Ansprüche 2 bis 4,
   **dadurch gekennzeichnet, dass** die Vorwärtsgeschwindigkeit V in Knoten ausgedrückt folgende Gleichung erfüllt:
   V = (0,45 x VH) + 65kts, wobei VH die Maximalgeschwindigkeit des Drehflügelflugzeugs ist.

6. Optimierungsverfahren nach einem der Ansprüche 1 bis 5,
   **dadurch gekennzeichnet, dass** die zentrierte Frequenz FC 500 Hz beträgt.

7. Optimierungsverfahren nach einem der Ansprüche 1 bis 6,
   **dadurch gekennzeichnet, dass** die ganzen Zahlen n und m 1 bzw. 0 betragen.

8. Akustisch optimierter Heckrotor (2) eines Drehflügelflugzeugs, welches bei einer Vorwärtsgeschwindigkeit V lärmzertifiziert ist und einen verkleideten Heckrotor (7) aufweist mit einer Mehrzahl von Rotorblättern mit einem Durchmesser D, wobei der Rotor eine vorbestimmte Anzahl b von Rotorblättern (10) mit variabler Schrägstellung aufweist, die mit einer Drehgeschwindigkeit Ω drehbar und im Wesentlichen koaxial in einem Luftströmungskanal 6 gelagert sind, der im Wesentlichen quer zur Längsachse des Drehflügelflugzeugs verläuft und eine in dem hinteren Bereich des Drehflügelflugzeugs integrierte Verkleidung (5) durchquert,

**dadurch gekennzeichnet, dass** die Parameter bezüglich des Durchmessers D des Rotors, der vorgegebenen Anzahl b der Rotorblätter und der Tangentialgeschwindigkeit U am freien Ende der Rotorblätter, die die Gleichung verfüllt U = Ω x (D x 2), derart gewählt sind, dass gilt:

$$\frac{\mathrm{U} x [(n x b) \pm m]}{\mathrm{D}} < \frac{\pi x \mathrm{FC}}{\sqrt[6]{2}} \left[ 1 - \left( \frac{v}{a} x \cos \theta e \right) \right],$$

wobei n und m ganze positive Zahlen darstellen, FC die zentrierte Frequenz eines Drittels einer vorbestimmten Oktave ist, a und θe die Schallgeschwindigkeit bzw. den Winkel zwischen der Vorwärtsgeschwindigkeit V und der Achse des Heckrotors, das heißt der wahrgenommenen Lärmquelle, bezeichnen.

9. Vorrichtung nach Anspruch 8,
   **dadurch gekennzeichnet, dass** die Schallgeschwindigkeit a bei einer Außentemperatur zwischen 15 °C und 25 °C bestimmt wird.

10. Vorrichtung nach Anspruch 8 oder 9,
    **dadurch gekennzeichnet, dass** der Winkel θe zwischen 30 ° und 45 ° beträgt.

11. Vorrichtung nach einem der Ansprüche 8 bis 10,
    **dadurch gekennzeichnet, dass** die Vorwärtsgeschwindigkeit V, ausgedrückt in Knoten folgende Formel erfüllt: [(0,45 x VH) + 65kts], wobei VH die maximale Vorwärtsgeschwindigkeit des Drehflügelflugzeugs darstellt.

12. Vorrichtung nach einem der Ansprüche 8 bis 11,
    **dadurch gekennzeichnet, dass** die zentrierte Frequenz 500 Hz beträgt.

13. Vorrichtung nach einem der Ansprüche 9 bis 12,
    **dadurch gekennzeichnet, dass** die Antidrehmomentvorrichtung (2) mit verkleidetem Heckrotor einen Ausgleichsstator (8) aufweist, der in dem Strömungskanal (6) stromab zum Rotor (7) bezüglich der Strömungsrichtung der den Kanal durchströmenden Luft angeordnet ist und feste Stützen (9) aufweist, die im Wesentlichen sternförmig um die Achse x-x des Strömungskanals (6) angeordnet sind.

# Fig.1

# Fig.2

Fig.3

Fig.4

$$FLI = \frac{FC}{\sqrt{2}} \qquad FC \qquad FLS = FC \times \sqrt{2}$$

Fig.5

$$FLI \qquad FL = \frac{FC}{\sqrt[6]{2}} \qquad FC \qquad FS = \sqrt[6]{2} \times FC \qquad FLS$$

Fig.6

Fig.7

Fig.8a

Fig.8b

Fig.9

Fig.10

Fig.11

Fig.12

**EP 2 085 310 B1**